(19) Europäisches Patentamt

European Patent Office

Office européen des brevets

(11) **EP 2 513 203 B1**

(12) **FASCICULE DE BREVET EUROPEEN**

(45) Date de publication et mention
de la délivrance du brevet:
**03.04.2019 Bulletin 2019/14**

(21) Numéro de dépôt: **10796349.8**

(22) Date de dépôt: **14.12.2010**

(51) Int Cl.:
*C08J 5/04* *(2006.01)*    *B29B 15/10* *(2006.01)*
*B29C 70/46* *(2006.01)*    *D04H 1/60* *(2006.01)*
*B29K 77/00* *(2006.01)*

(86) Numéro de dépôt international:
**PCT/EP2010/069650**

(87) Numéro de publication internationale:
**WO 2011/073200 (23.06.2011 Gazette 2011/25)**

(54) **ARTICLE COMPOSITE A BASE DE RESINES POLYAMIDES DE FAIBLES MASSES MOLECULAIRES**

ARTIKEL MIT NIEDERMOLEKULAREN POLYAMIDHARZEN

ARTICLE COMPRISING LOW MOLECULAR WEIGHT POLYAMIDE RESINS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.12.2009 FR 0958944**

(43) Date de publication de la demande:
**24.10.2012 Bulletin 2012/43**

(73) Titulaire: **Rhodia Operations
93306 Aubervilliers (FR)**

(72) Inventeurs:
• **JEOL, Stéphane
69006 Lyon (FR)**
• **MOLLET, Vincent
71100 Chalon-sur-Saone (FR)**
• **ORANGE, Gilles
F-69390 Vourles (FR)**

(74) Mandataire: **Benvenuti, Federica et al
Solvay S.A.
Département de la Propriété Intellectuelle
Rue de Ransbeek, 310
1120 Bruxelles (BE)**

(56) Documents cités:
**EP-A1- 0 693 515        WO-A1-03/014198
WO-A1-2008/155318      US-A1- 2008 274 355**

EP 2 513 203 B1

**Description**

La présente invention concerne l'utilisation de résines polyamides de faibles masses moléculaires pouvant être mises en oeuvre dans des conditions de transformation similaires à celles des polyamides de hautes masses moléculaires pour la fabrication d'articles composites. Les dits articles présentent de bonnes propriétés mécaniques, telles que notamment la rigidité, la résistance à la rupture, la résistance aux chocs, et le comportement en fatigue, même lorsqu'ils sont fabriqués avec des temps de cycle plus courts que ceux habituellement utilisés, et sans aucun autre traitement pendant ou après la fabrication des articles composites.

## ART ANTERIEUR

Dans le domaine des matériaux hautes-performances, les composites ont pris une place prépondérante, de par leurs performances et les gains de poids qu'ils autorisent. Les composites hautes performances les plus connus à ce jour, sont obtenus à partir de résines thermodurcissables, dont l'utilisation est limitée aux applications de faibles à moyennes séries, principalement dans l'aéronautique, le sport automobile, et dans les meilleurs cas, présentant des temps de fabrication voisins d'une quinzaine de minutes, comme par exemple, lors de la fabrication de skis. Le coût de ces matériaux, et/ou les temps de fabrication, les rendent difficilement compatibles avec un usage en grande série. De plus, l'utilisation de résines thermodurcissables implique souvent la présence de solvants et de monomères. Enfin, ces composites sont difficilement recyclables.

Une réponse, en regard des temps de fabrication, est donnée par les composites à matrice thermoplastique. Les polymères thermoplastiques sont en général connus pour leur viscosité élevée, ce qui constitue un frein en ce qui concerne l'imprégnation des matériaux de renfort, composés en général de faisceaux multifilamentaires très denses. Il résulte de l'emploi des matrices thermoplastiques disponibles sur le marché, une difficulté d'imprégnation nécessitant soit des temps d'imprégnation prolongés, soit des pressions de mise en oeuvre importantes. Dans la majeure partie des cas, les matériaux composites obtenus à partir de ces matrices peuvent présenter des microvides et des zones non imprégnées. Ces microvides causent des chutes de propriétés mécaniques, un vieillissement prématuré du matériau ainsi que des problèmes de délaminage lorsque le matériau se compose de plusieurs couches de renforts. Ce phénomène de perte de propriétés mécaniques est par ailleurs accentué lorsque les temps de cycle pour la fabrication des articles composites diminuent.

L'objectif de la présente invention est donc de remédier à ces inconvénients en proposant un article composite qui puisse être fabriqué avec des temps de cycle courts tout en ayant de bonnes propriétés d'usage, telles que de bonnes propriétés mécaniques.

Le brevet EP0261020B1 décrit un procédé de fabrication de composite polyamide comprenant des fibres de verre, dans lequel le polyamide présente la particularité d'être un prépolymère ou oligomère portant exclusivement en extrémité de chaîne des fonctions réactives. La faible viscosité de ces prépolymères permet d'assurer un bon mouillage, ou une bonne imprégnation, des fibres par le polymère. La présence de fonctions réactives sur le prépolymère polyamide permet de provoquer, par traitement à haute température, la réaction entre les extrémités réactives produisant de l'eau de condensation, qui est un inconvénient car cela implique d'extraire cette eau du composite pour assurer de bonnes performances du composite, et un allongement de chaîne du prépolymère et ainsi une augmentation de la viscosité fondu. Dans ce cas, la masse molaire initiale n'est pas conservée : la masse molaire finale du polyamide sur le composite est très dépendante des conditions de mise en oeuvre (T°C, pression, dégazage, ...). Ainsi, un changement des conditions de fabrication du composite peut induire un changement des cycles de production de composite et des performances du composite.

Le document WO03/014198 décrit un procédé de préparation de composites, dans lequel on procède à l'imprégnation d'étoffes de renfort à l'iade d'un pré-condensat polyamide à faible masse moléculaire, suivi par une étape de condensation, permettant d'arriver au condensât, à savoir au polyamide à haut poids moléculaire.

Le document US2008/0274355 divulgue certains formulations à base de polyamides comprenant des motifs dérivés de la condensation de l'acide téréphtalique avec l'héxaméthylènediamine et la décaméthylènedecamine, et comprenant des charges de renfort. Lesdits polyamides peuvent présenter des concentrations en groupements terminaux amines ou carboxyliques entre 10 et 150 mmol/kg en fonction de la stoechiométrie de la réaction de polycondensation. Le document WO2008/155318 décrit l'utilisation de polyamide de haute fluidité pour l'imprégnation de matériaux de renfort.

## INVENTION

La demanderesse a découvert de manière inattendue que l'utilisation de polyamides sous forme de faibles masses molaires et dont une partie des extrémités de chaîne est non réactive pour la fabrication d'articles composites permettaient l'obtention, dans des conditions de transformation similaires à celle des polyamides de hautes masses molaires, des articles présentant de bonnes propriétés mécaniques, telles que notamment la rigidité, la résistance à la rupture, la résistance aux chocs, et le comportement en fatigue, même lorsqu'ils sont fabriqués avec des temps de cycle plus courts que ceux habituellement utilisés, et sans aucun autre traitement.

Ceci permet de fournir un matériau composite présentant un avantage de réduction de coûts de fabrication, par l'emploi d'un outillage mettant en oeuvre des temps de cycles raccourcis. Par ailleurs, les résines polyamides selon l'invention sont simples à fabriquer, notamment par polymérisation des monomères du polyamide en présence d'une ou de plusieurs molécules monofonctionnelles appelées « limiteurs de chaîne » selon les mêmes procédés de synthèse que ceux servant à préparer les polyamides de hautes masses molaires.

Il a été observé que les masses moléculaires des résines polyamides considérées n'évoluent pas vers une augmentation de masse molaire dans les conditions usuelles de fabrication des pièces composites à base de polyamide de hautes masses molaires, lors du procédé de fabrication des pièces composites. Ainsi, des composites avec de hautes performances mécaniques sont obtenus de manière tout à fait surprenante alors que la matrice polymérique ne présente en elle-même pas de performances mécaniques élevées en raison de sa trop faible masse moléculaire.

Les transformateurs ayant l'habitude de mettre en oeuvre des polyamides de haute masse molaire, généralement avec des masse molaires moyennes en nombre Mn bien supérieures à 8000 g/mol, savent qu'ils doivent conditionner les polyamides à des teneurs en eau définies, qui dépendent notamment de la nature du polyamide et des conditions de transformation telles que la température et la pression, avant de les transformer pour éviter d'avoir des évolutions de la viscosité fondue et donc des perturbations des cycles de transformation. La viscosité fondue du polyamide est reliée à sa masse molaire. Ainsi, pour éviter d'avoir des évolutions de la viscosité fondue, il est important que le polyamide conserve sa masse molaire initiale pendant toute la durée de sa transformation.

Les polyamides sont obtenus par réaction entre des diamines, des diacides et éventuellement des limiteurs de chaîne généralement monoacide et/ou monoamine. La réaction de condensation entre les fonctions amine et acide à une température et une pression donnée est une réaction équilibrée qui produit des fonctions amide et de l'eau et caractérisée par une constante d'équilibre thermodynamique K définie par l'équation K=([amide].[H$_2$O])/([amine].[acide]), où [amide], [H2O], [amine] et [acide] sont respectivement les concentrations en fonctions amide, en eau, en amine et en acide.

Généralement, le transformateur a déterminé de manière empirique des conditions de conditionnement, notamment de séchage, des polyamides de hautes masses molaires qu'il a l'habitude de transformer pour éviter d'avoir des évolutions de viscosité lors de leur transformation. Il y a une demande pour utiliser des résines polyamides de faible viscosité, donc de faibles masses molaires pour faciliter l'imprégnation des fibres, et ne nécessitant pas d'adapter les conditions de séchage pour garantir une non évolutivité de la masse molaire lors de leur transformation. Les résines polyamide de faibles masses molaires de l'invention présentent l'avantage de pouvoir être transformées à des teneurs en eau similaires à celles utilisées par les transformateurs pour mettre en oeuvre les polyamides de hautes masses molaires de même nature sans évolution significative de leur masse molaire, dans des conditions de température et de pression identiques.

Les articles selon l'invention présentent notamment les avantages de rigidité, légèreté, et recyclabilité, et un bon aspect de surface.

L'invention a pour premier objet un procédé de fabrication d'un article composite selon la revendication 1.

On entend notamment par article composite selon l'invention un matériau comprenant une ossature appelée renfort qui assure la tenue mécanique et d'une matrice thermoplastique qui assure la cohésion de la structure et la retransmission des efforts vers le renfort.

## ETOFFE

On entend par étoffe, une surface textile obtenue par assemblage de fils ou de fibres solidarisés par un procédé quelconque, tel que notamment collage, feutrage, tressage, tissage, tricotage. Ces étoffes sont aussi désignées comme des réseaux fibreux ou filamenteux. Par fil, on entend un monofilament, un fil multifilamentaire continu, un filé de fibres, obtenu à partir d'un unique type de fibres ou de plusieurs types de fibres en mélange intime. Le fil continu peut être également obtenu par assemblage de plusieurs fils multifilamentaires. Par fibre, on entend un filament ou un ensemble de filaments coupés, craqués ou convertis.

L'étoffe de renfort comprend préférentiellement des fils et/ou fibres de renfort choisis parmi les fils et/ou les fibres de carbone, de verre, d'aramides, de polyimides, de lin, de chanvre, de sisal, de coir, de jute, de kenaf et/ou de leur mélange. Plus préférentiellement, les étoffes de renfort sont uniquement constituées de fils et/ou fibres de renfort choisis parmi les fils et/ou les fibres de carbone, de verre, d'aramides, de polyimides, de lin, de chanvre, de sisal, de coir, de jute, de kenaf et/ou de leur mélange.

Ces étoffes on préférentiellement un grammage, c'est-à-dire le poids au mètre carré, compris entre 100 et 1000 g/m$^2$.

Leur structure peut être aléatoire (mat), unidirectionelle (UD), ou multidirectionnelle plus ou moins équilibrée (2D, 2,5D, 3D ou autre).

## POLYAMIDES

Les polyamides peuvent être choisis dans le groupe comprenant les polyamides obtenus par polycondensation d'au moins un diacide carboxylique aliphatique linéaire avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leur mélange et (co)polyamides. Les polyamides semi-cristallins sont particulièrement préférés. Les polyamides linéaires sont également préférés.

Le polyamide de l'invention est notamment choisi dans le groupe comprenant les polyamides obtenus par polycondensation d'au moins un diacide carboxylique aliphatique avec une diamine aliphatique ou cyclique comme le PA 6.6, PA 6.10, PA 6.12, PA 12.12, PA 4.6, MXD 6 ou entre au moins un diacide carboxylique aromatique et une diamine aliphatique ou aromatique comme les polytéréphtalamides, polyisophtalamides, polyaramides, ou leur mélange et (co)polyamides. Le polyamide de l'invention peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple PA 6, PA 7, PA 9, PA 11, PA 12, PA 13 ou leur mélange et (co)polyamides. Le polyamide de l'invention peut aussi être choisi dans le groupe des polyamides obtenus par polycondensation de diacide, de diamine et d'aminoacide comme les copolyamides PA 6.6/6. On préfère notamment les polyamide linéaires.

Les polyamides de hautes masses molaires, généralement bien supérieures à 8000 g/mol, présentent notamment des extrémités de chaîne amine et acide, et éventuellement des limiteurs de chaîne également appelés bloqueurs de chaîne, en concentrations respectives GTA, GTC et GTB exprimées par exemple en meq/kg de polyamide. La masse molaire moyenne en nombre des polyamides linéaires, exprimée en g/mol, peut être obtenue par le calcul suivant : Mn=2000000/(GTA+GTC+GTB). Pour les polyamides à architectures diverses, il existe d'autres expressions permettant d'arriver à la masse molaire moyenne en nombre du polyamide à partir des concentrations en extrémités de chaîne. Les concentrations en extrémités de chaîne amine GTA et acide GTC permettent également de déterminer la teneur en eau des polyamides nécessaire pour assurer l'absence d'évolution des masses molaires lors de la transformation.

Les polyamides de l'invention peuvent être obtenus par polymérisation notamment réalisée selon les conditions opératoires classiques de polymérisation des polyamides, de manière continue ou discontinue, en présence d'un ou de plusieurs limiteurs de chaîne ; ou par extrusion d'un polyamide en présence d'un ou de plusieurs limiteurs de chaîne.

Par molécule monofonctionnelle également appelée « limiteur de chaîne » ou « bloqueur de chaîne », on désigne une molécule qui, par réaction avec les monomères du polyamide, engendre la formation d'une seule liaison covalente.

La fonction réactive du limiteur de chaîne peut être un acide carboxylique ou ses dérivés, comme le chlorure d'acyle, l'ester, l'amide, le diacide vicinal, l'anhydride d'acide, une amine, un aldéhyde, une cétone, un halogénure, un isocyanate, une urée, un alcool, un thiol. La molécule fonctionnelle peut en outre comporter un ou plusieurs hétéroatomes ne participant pas à la réaction avec les monomères du polyamide.

Les résines polyamides selon l'invention présentent une concentration en groupements terminaux amine (GTA) supérieure ou égale à 25 meq/kg et préférentiellement inférieure ou égale à 220 meq/kg, plus préférentiellement supérieure ou égale à 30 meq/kg et inférieure ou égale à 150 meq/kg.

Les résines polyamides selon l'invention présentent une concentration en groupements terminaux carboxylique (GTC) supérieure ou égale à 25 meq/kg et préférentiellement inférieure ou égale à 220 meq/kg, plus préférentiellement supérieure ou égale à 30 meq/kg et inférieure ou égale à 150 meq/kg.

Les résines polyamides selon l'invention présentent une concentration en groupements terminaux bloqués (GTB) supérieure ou égale à 25 meq/kg et préférentiellement inférieure ou égale à 250 meq/kg, plus préférentiellement supérieure ou égale à 30 meq/kg et inférieure ou égale à 200 meq/kg.

Le polyamide convenable pour la présente invention dépend des caractéristiques du polyamide de haute masse molaire dont il découle. Ainsi, si par exemple un transformateur utilise classiquement un polyamide 66 caractérisé par GTA=40 meq/kg et GTC=80 meq/kg, et par conséquent une Mn de 16670 g/mol, un polyamide convenable de masse molaire Mn=6000 g/mol pour la présente invention peut ainsi présenter par exemple un polyamide 66 ayant un GTA de 40 meq/kg, un GTC de 80 meq/kg et un GTB=213 meq/kg. La concentration en groupement amide est, pour les deux PA 66, d'environ de 8840 meq/kg. Leur teneur en eau à l'équilibre thermodynamique, teneur en eau permettant une non évolution de la masse molaire des chaînes, est donc identique.

Les quantités de groupements terminaux amine (GTA) et/ou acide (GTC) peuvent être déterminées par dosage potentiométrique après complète dissolution du polyamide, par exemple dans le trifluoroéthanol, et ajout d'une base forte en excès. Les espèces basiques sont alors titrées par une solution aqueuse d'acide fort. La quantité de limiteur de chaîne est calculée par le rapport entre la quantité molaire de limiteur de chaîne ajoutée et la masse de polymère produit. La quantité de limiteur de chaîne peut également être déterminée par hydrolyse du polyamide suivie d'une analyse par chromatographie liquide.

De telles résines selon l'invention peuvent être fabriquées de nombreuses manières et sont bien connues en soit de l'homme de l'art.

On peut par exemple fabriquer de telles résines par ajout en polymérisation, notamment au début, en cours ou en fin de la polymérisation, des monomères du polyamide, en présence de composés monofonctionnels et éventuellement d'autres composés difonctionnels destinés à ajuster la stoechiométrie entre les fonctions réactives perturbée par l'ajout du composé monofonctionnel.

Il est également possible de mélanger à un polyamide des composés monofonctionnels et éventuellement difonctionnels, notamment par extrusion, généralement une extrusion réactive, de façon à obtenir la résine polyamide utilisée selon la présente invention.

On peut utiliser tout type d'acide mono- ou di-carboxylique, aliphatique, cycloaliphatique, arylaliphatique ou aromatique ou tous types d'amine mono- ou di-amine, aliphatique, cycloaliphatique, arylaliphatique ou aromatiques. Tous les monomères peuvent porter ou non des insaturations. On peut notamment utiliser comme composé monofonctionnel la n-dodécylamine et la 4-amino-2,2,6,6-tétraméthylpipéridine, l'acide acétique, l'acide phtalique, l'acide laurique, la benzylamine, l'acide benzoïque et l'acide propionique . On peut notamment utiliser comme composé difonctionnel, l'acide adipique, l'acide téréphtalique, l'acide isophtalique, l'acide sébacique, l'acide azélaïque, l'acide dodécanedioïque, l'acide décanedioïque, l'acide pimélique, l'acide subérique, les dimères d'acides gras, la di($\beta$-éthylcarboxy) cyclohexanone, l'hexaméthylène diamine, la méthyl-5 pentaméthylène diamine, la métaxylylène diamine, la butanediamine, l'isophorone diamine, le 1,4 diamino cyclohexane, la 3,3',5-triméthyl hexaméthylènediamine.

On peut également ajouter en outre des molécules polyfonctionnelles, comme la bishexaméthylène triamine par exemple.

Afin d'obtenir des concentrations en groupements terminaux acides et amines d'un polyamide supérieures à 25 meq/kg, il n'est généralement pas nécessaire d'opérer une finition sous vide en fin de polymérisation.

Le polyamide selon l'invention sous forme de résine non évolutive présente avantageusement une viscosité fondue $\eta$ inférieure ou égale à 40 Pa.s, préférentiellement inférieure ou égale à 20 Pa.s. Cette viscosité peut être mesurée à l'aide d'un rhéomètre plan-plan de diamètre 50 mm, sous un balayage en cisaillement par palier allant de 1 à 160 s-1. Le polymère est sous forme de granulés, ou bien de film d'une épaisseur 150 $\mu$m. Le polyamide, lorsqu'il est semi-cristallin, est amené à une température de 30°C au dessus de son point de fusion, et la mesure est alors effectuée. Le polyamide, lorsqu'il est amorphe, est amené à une température de 250°C, et le mesure est alors effectuée.

## PROCEDE

L'étape d'imprégnation de la résine polyamide et de l'étoffe de renfort peut être réalisée de diverses manières, selon divers procédés possibles. Il est parfaitement possible de procéder à l'imprégnation d'une ou plusieurs étoffe(s) de renfort.

L'imprégnation de l'étoffe de renfort par la composition polyamide peut notamment être réalisée par mise en présence de la composition polyamide à l'état fondu, notamment par injection, avec l'étoffe de renfort ; cette étoffe pouvant être située dans un moule. L'imprégnation peut aussi être réalisée par mise en présence de l'étoffe de renfort avec la composition polyamide sous forme de poudre ou de film, puis mise en fusion de ladite composition polyamide.

On peut par exemple injecter la résine polyamide en fondu dans une chambre de moulage comprenant au moins une ou plusieurs étoffes de renfort. L'intérieur de la chambre de moulage peut être à une température de plus ou moins 50°C par rapport à la température de fusion dudit polyamide. Après imprégnation, on peut procéder ensuite au refroidissement de la chambre de moulage et de l'article obtenu, pour enfin récupérer ledit article. Ce procédé est connu également sous le nom de procédé de moulage par transfert de résine (RTM) en procédé thermodur, qui consiste à injecter de la résine dans un moule fermé dans lequel ont été préalablement placées des fibres de renforcement. Ce procédé peut être réalisé sous pression.

On peut également réaliser un article composite selon l'invention par un procédé de mise en contact d'une ou plusieurs étoffes de renfort avec de la poudre d'une résine polyamide telle que définie précédemment, notamment de la poudre fine obtenue par broyage, et l'on réalise ladite imprégnation par fusion du polyamide, à une température égale ou supérieure à celle du point de fusion du polyamide, éventuellement sous pression.

L'article composite selon l'invention peut aussi être réalisé par compression en température d'un empilement d'étoffes de renfort et de films de résine polyamide : procédé de « film stacking ». On procède alors à la mise en contact d'une ou plusieurs étoffes de renfort et un ou plusieurs films de résine polyamide de haute fluidité et imprégnation des étoffes par fusion du polyamide. Les pressions nécessaires pour un bon assemblage, sont généralement supérieures à quelques bars.

Après l'imprégnation de l'étoffe de renfort par la résine polyamide, l'article est obtenu par solidification de la matrice. Le refroidissement peut avantageusement être effectué rapidement de façon à éviter une cristallisation trop importante du polyamide, notamment pour maintenir les propriétés de l'article. Le refroidissement peut notamment être effectué en moins de 5 minutes, plus préférentiellement en moins d'une minute. Le moule peut par exemple être refroidit par un circuit de fluide froid. On peut aussi éventuellement transférer l'article composite dans un moule froid, éventuellement sous pression.

## COMPOSITION

La composition polyamide et/ou l'article composite selon l'invention peuvent également comprendre tous les additifs habituellement utilisés dans les compositions à base de polyamide utilisées pour la fabrication d'articles. Ainsi, on peut citer à titre d'exemple d'additifs les stabilisants thermiques, stabilisants UV, antioxydants, lubrifiants, les pigments, colorants, plastifiants, charges de renfort, et agents modifiant la résistance aux chocs. Ces additifs peuvent être incorporés lors de la synthèse de la résine ou bien en ajout aux poudres ou films ou à la fusion lors de l'infiltration.

La composition peut notamment comprendre de la résine novolac. La composition polyamide comprend préférentiellement de 5 à 25 % en poids de résine novolac, par rapport au poids total de la composition. Le pourcentage en poids est représenté par rapport au poids total de la composition. Les résines novolac sont généralement des produits de condensation de composés phénoliques avec des aldéhydes ou cétones ou leurs dérivés comme les fonctions cétals ou hémicétals. Ces réactions de condensation sont généralement catalysées par un acide ou une base.

Des additifs pour améliorer la qualité des interfaces étoffes de renfort polyamide peuvent également être utilisés. Ces additifs peuvent être par exemple incorporés à la composition polyamide, incorporés dans les fils et/ou fibres de l'étoffe de renfort, présents sur les fils et/ou fibres de ladite étoffe, ou encore déposés sur l'étoffe de renfort. Ces additifs peuvent être des agents de couplage tels que ceux de type aminosilanes ou chlorosilanes (notamment dans le cas d'étoffe en verre), ou encore des agents fluidifiants ou mouillants, ou leur association.

Des charges renforçantes peuvent être incorporées à la composition polyamide. Ces charges peuvent être choisies parmi les charges fibreuses, tels que des fibres de verre courtes par exemple, ou des charges non fibreuses tels que le kaolin, le talc, la silice, le mica ou la wollastonite. Leur taille est généralement comprise entre 1 et 50 $\mu$m. Des charges sub-microniques voire nanométriques peuvent également être utilisées, seules ou en complément des autres charges.

La présente invention concerne aussi un article susceptible d'être obtenu par le procédé de l'invention.

Les articles selon l'invention comprennent préférentiellement entre 25 et 70 % en volume d'étoffe de renfort par rapport au volume total de l'article.

## ARTICLES

Les articles de l'invention peuvent être des articles finis, ou encore semi-finis, pouvant être appelé pré-imprégnés. La présence de résine non évolutive peut être particulièrement intéressante dans ce cas dans la mesure où la bonne fluidité utilisée lors de la fabrication des articles semi-finis est en effet conservée lors de la mise en forme finale pour la réalisation des articles finis. On peut par exemple procéder au thermoformage des articles composites sous forme de plaques pour leur donner une forme définie après refroidissement. L'invention concerne ainsi des articles composites ou préformes susceptibles d'être obtenus par le procédé selon la présente invention.

Les articles de l'invention peuvent aussi être des structures de type sandwich présentant une âme généralement de faible densité insérée entre deux couches externes (peaux). Les composites de l'invention peuvent être utilisés pour former les couches externes, en les associant à une âme type nid d'abeille ou type mousse. Les couches peuvent être assemblées par collage chimique ou thermique, ou encore tout autre procédé.

Les structures composites selon l'invention peuvent être employées dans de nombreux domaines tels que l'aéronautique, l'automobile et plus généralement les transports, l'industrie électrique, l'industrie des sports et loisirs. Ces structures peuvent être utilisées pour réaliser des articles de sports tels que des skis ou bien pour réaliser des surfaces diverses telles que des planchers spéciaux, des cloisons, des carrosseries de véhicules, ou des panneaux publicitaires. Dans l'aéronautique ces structures sont utilisées notamment au niveau des carénages (fuselage, aile, empennage). Dans l'automobile, elles sont utilisées par exemple au niveau des planchers ou des supports tels que les tablettes arrières.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

**PARTIE EXPERIMENTALE**

Caractérisations :

- Teneurs en groupements terminaux acide (GTC) et amine (GTA) : dosées par potentiométrie, exprimées en meq/kg.
- Teneur en groupements terminaux Bloqueur (GTB) calculée à partir des quantités de réactifs introduits dans le réacteur de polymérisation.
- Masse molaire moyenne en nombre Mn déterminée par la formule $Mn=2.10^6/(GTA+GTC+GTB)$ et exprimée en g/mol. La masse moléculaire moyenne en poids Mw a le cas échéant été déterminée par GPC.
- Indice de viscosité en solution exprimé en mL/g, déterminé dans l'acide formique à partir ISO 307. L'indice de viscosité en solution donne une indication de la masse molaire pour les polymères linéaires de même nature (les polyamides 6 sont directement comparables entre eux, les polyamides 66 sont directement comparables entre eux). Plus l'IV est élevé, plus la masse molaire est élevée.

Ces trois types de caractérisation de la masse molaire sont bien connues de l'homme de l'art et permette de déterminer clairement si un polymère a augmenté en masse molaire ou pas.

- Température de fusion ($T_f$) et enthalpie associée ($\Delta Hf$), température de cristallisation au refroidissement ($T_c$) : déterminées par calorimétrie différentielle à balayage (DSC « Differential Scanning Calorimetry »), à l'aide d'un appareil Perkin Elmer Pyris 1, à une vitesse de 10°C/min.
- Température de transition vitreuse ($T_g$) déterminée sur le même appareil à une vitesse de 40 °C/min.

**Exemple 1** : **préparation d'un polyamide PA 6 bloqué acide benzoïque**

Dans un réacteur de polymérisation sont introduits 150,31 g (1,328 mol) de caprolactame, 2,087 g d'acide benzoïque à 99,5% (0,017 mol), 72,3 g d'eau déminéralisée et 2 g d'un agent antimousse.

Le polyamide 6 bloqué acide benzoïque est fabriqué selon un procédé standard de polymérisation de type polyamide 6, avec 60 minutes de finition à 260°C à pression atmosphérique.

Le polymère obtenu est coulé sur un plateau, refroidi puis broyé. Avant analyses, le PA 6 bloqué acide benzoïque est lavé trois fois à l'eau chaude pour éliminer les oligomères résiduels.

Le polymère obtenu présente les caractéristiques suivantes: GTC = 131,8 meq/kg, GTA = 25,8 meq/kg et GTB= 114 meq/kg. Mn = 7 360 g/mol. Son IV= 55,8 mL/g.

Le copolyamide est semi-cristallin et a les caractéristiques thermiques suivantes : Tc= 192,2 °C, Tf= 222,7 °C, $\Delta Hf$ = 60,1 J/g.

**Exemple 2** : **préparation d'un polyamide 66 terminé acide acétique**

Dans un réacteur de polymérisation sont introduits 90,75 kg (345,93 mol) de sel N (sel 1:1 d'hexaméthylène diamine et d'acide adipique), 939 g d'acide acétique à 100% (15,65 mol), 3,05 kg d'une solution d'hexaméthylène diamine (HMD) en solution dans l'eau à 32,60 % en poids (8,56 mol) et 83,5 kg d'eau déminéralisée et 6,4 g d'agent antimousse Silcolapse 5020®.

Le polyamide 66 bloqué acide acétique est fabriqué selon un procédé standard de polymérisation de type polyamide 66, avec 30 minutes de finition.

Le polymère obtenu est coulé sous forme de jonc, refroidi et mis sous forme de granulé par coupe des joncs.

Le polymère obtenu présente les caractéristiques suivantes : GTC = 59,9 meq/kg, GTA = 65,7 meq/ kg et GTB= 196 meq/kg, Mn = 6 200 g/mol. Son IV= 56,2 mL/g.

Le copolyamide est semi-cristallin et a les caractéristiques thermiques suivantes : Tc= 232,3°C, Tf=263,1°C, $\Delta Hf$ = 74,5 J/g.

**Exemple 3** : **Mesure de viscosité en fondu des polymères**

Ces polyamides ont été caractérisés par des mesures de viscosité à l'état fondu réalisés sur un rhéomètre cône-plan Ares Rheometrics (diamètre 25mm, angle du cône 0,1 rad), à 280°C pour les polyester PET et à 255°C pour les polyester PBT. Les courbes de viscosité en fonction du taux de cisaillement montrent que les polymères considérés ont un comportement Newtonien : la viscosité retenue est la valeur au plateau (entre $10^{-1}$ et $10^2$ $s^{-1}$).

Pour le Polyamide selon l'exemple 1 (PA1) : $\eta$ = 9 Pa .s. Pour le Polyamide selon l'exemple 2 (PA2) : $\eta$ = 5 Pa.s

**Exemple 4** : **Préparation des composites**

Différentes résines polyamides ont été utilisées dans cette partie expérimentale et sont mentionnées au Tableau 1.

- PA C1 (comparatif) : polyamide 6 linéaire standard ayant un indice de viscosité IV de 115 mL/g (ISO 307 dans l'acide formique) et une masse moléculaire moyenne en poids Mw de 33000 g/mol.

- PA C2 (comparatif) : polyamide 6.6 linéaire standard ayant un indice de viscosité IV de 130 mL/g et une Mw de 33000 g/mol. GTA=46,2 meq/kg, GTC=79,5 meq/kg soit une Mn=15900 g/mol.

- PA C3 (comparatif) : polyamide 6.6 ayant un IV initial de 59 mL/g, une Mw de 15500 g/mol et une teneur GTA égale à 130 meq/kg et une teneur GTC égale à 160 meq/kg, soit une Mn=6900 g/mol.

Tous les échantillons ont été séchés dans les mêmes conditions que les conditions permettant d'arriver à aucune évolution du PA 66 linéaire haute masse molaire ; une nuit sous vide à 90°C. Les teneurs eau des échantillons sont inférieures à 2000 ppm.

Les polyamides sont synthétisés selon un procédé standard de synthèse de polyamide. Le produit fondu est ensuite extrudé par la vanne de coulée et recueilli sur une plaque métallique sur laquelle il cristallise. Les polyamides cristallisés sont broyés pour finalement obtenir une poudre prête à l'emploi après séchage une nuit sous vide.

Les caractéristiques des polyamides sont les suivantes :

**Tableau 1**

| Polyamide utilisé | Mw (g/mol) | Mn (g/mol) | GTC (meq/kg) | GTA (meq/kg) | GTB (mL/g) | IV (mL/g) |
|---|---|---|---|---|---|---|
| C1 | 33000 | N.M. | N.M. | N.M. | 0 | 115 |
| C2 | 33000 | 15900 | 79,5 | 46,2 | 0 | 130 |
| C3 | 15500 | 6900 | 160 | 130 | 0 | 59 |
| PA1 | N.M. | 7360 | 131,8 | 25,8 | 131,8 | 55,8 |
| PA2 | N.M. | 6200 | 59,9 | 65,7 | 196 | 56,2 |

Les renforts utilisés dans les exemples sont sous forme de préformes en tissus de verre, coupés aux dimensions requises pour la fabrication de plaques c'est-à-dire 150 x 150 mm. L'étoffe de renfort utilisée est un tissu en fibre de verre (0°-90°) d'origine Synteen & Luckenhaus issu d'un roving de 1200 tex, présentant un grammage de 600 g/m$^2$.

La réalisation des pièces composites est faite au moyen d'une presse hydraulique à double plateaux contrôlés en température Schwabenthan (Polystat 300A) : plateaux chauffants (résistances chauffantes), et plateaux refroidis (circulation d'eau). Un moule métallique dotée d'une empreinte de dimensions 150 mm x 150 mm est utilisé.

Pour réaliser un composite contenant 80% poids de fibres de verre avec le tissus de grammage 600 g/m$^2$ (65% en volume de fibres), on introduit dans le moule une préforme constituée d'un empilement alterné comprenant au total 6 feuilles de tissus de verre. De la poudre polyamide est située entre chaque feuille de tissus.

La température des plateaux de la presse est préalablement montée à 290°C pour les PA6.6 / à 250°C pour les PA6, avant l'introduction de la préforme. A cette température, la pression est appliquée et maintenue à une valeur nominale ; des dégazages sont rapidement effectués. Le moule est alors transféré sur le dispositif plateaux refroidis et maintenu sous pression. Différents types de cycle ont été utilisés : haute et moyenne pression, temps court et long.

Deux types de cycles ont été réalisés : un cycle 5 min sous 50 bars (Cycle 1), et un cycle de 5 min sous 5 bars (Cycle 2). Ces temps correspondent à la durée totale du cycle entre la mise en température du moule et le refroidissement sous pression.

**Exemple 5 : Caractérisation des articles composites**

Les plaques 150x150 mm sont découpées afin d'obtenir des échantillons de dimensions 150x20x2 mm. Un traitement de conditionnement est alors réalisé selon la norme ISO1110 "plastique/polyamide/conditionnement accéléré d'éprouvettes". La teneur en eau à l'équilibre est obtenue par conditionnement des pièces composites avec un cycle de 11 jours, à 70°C sous une humidité résiduelle RH de 62%.

Les propriétés mécaniques ont été obtenues à 23°C, et humidité RH = 50% (stabilisation des éprouvettes 48h à 23°C, RH = 50).

Les essais de flexion 3 points à température ambiante sont réalisés sur des éprouvettes parrallépipédiques (150x20x2 mm), selon la norme ISO N° 14125, sur une machine ZWICK 1478 : entre-axe de 64 mm, vitesse de traverse de 5 mm/min. Les valeurs de module élastique E de Young (GPa) et de contrainte σ max au pic (MPa) sont mesurées et calculées.

Les résultats sont exprimés aux Tableaux 2 et 3 suivants :

**Tableau 2**

| Polyamide utilisé | CYCLE 1 | | CYCLE 2 | |
|---|---|---|---|---|
| | Module élastique E (GPa) | Contrainte σ max (MPa) | Module élastique E (GPa) | Contrainte σ max (MPa) |
| C1 | 25 | 550 | 15 | 200 |
| C2 | 27 | 600 | 24 | 450 |
| C3 | 26,5 | 595 | 26,5 | 585 |
| PA1 | 26 | 380 | 25 | 400 |
| PA2 | 26 | 540 | 25 | 490 |

**Tableau 3**

| Polyamide utilisé | Polymère de départ | | | Polymère dans le composite | | |
|---|---|---|---|---|---|---|
| | Mw (g/mol) | Mn (g/mol) | IV mL/g | Mw (g/mol) | Mn (g/mol) | IV (mL/g) |
| C1 | 33000 | N.M. | 115 | 33000 | N.M. | N.M. |
| C2 | 33000 | 15900 | 130 | 33000 | N.M. | N.M. |
| C3 | 15500 | 6900 | 59 | 21000 | N.M. | N.M. |
| PA1 | N.M. | 7360 | 55,8 | N.M. | N.M. | 47,5 |
| PA2 | N.M. | 6200 | 56,2 | N.M. | N.M. | 45,4 |

On observe ainsi l'obtention d'articles composites ayant de bonnes propriétés mécaniques en utilisant les polyamides selon l'invention, particulièrement en procédant à des cycles de fabrication peu contraignant comme le cycle 2, en comparaison avec des polyamides classiques de l'art antérieur (C1 et C2). Par ailleurs les polyamides de l'invention PA 1 et PA 2 présentent un très bon aspect de surface et une facilité d'usage incomparable, dû à leur faible viscosité en fondu, en comparaison avec les polyamides C1 et C2.

Au surplus, on observe que les articles selon l'invention présentent un excellent compromis de propriétés mécaniques et de fluidité en fondu en comparaison avec des articles obtenus par mise en oeuvre des prépolymères évolutifs (C3).

Par ailleurs, il apparait que le prépolymère C3 présente une instabilité due à sa réactivité dans la mesure où il n'a pas été polymérisé jusqu'à atteindre son équilibre thermodynamique. Il est également difficile à produire pour la même raison. Alors que les polyamides de l'invention PA 1 et PA 2 n'augmentent pas en masse molaire donc conserve leur faible viscosité fondu, la viscosité du prépolymère C3 a quant à elle augmenté. Il apparait également au cours des essais qu'en fonction des conditions de mises en oeuvre de l'article composite utilisant le prépolymère C3 les propriétés mécaniques de celui-ci peuvent varier largement due à cette instabilité.

## Revendications

**1.** Procédé de fabrication d'un article composite par moulage comprenant au moins les étapes suivantes :

a) une étape d'imprégnation d'une étoffe de renfort avec une composition comprenant une résine polyamide à l'état fondu, ladite résine étant une résine non évolutive, c.à.d. dont les masses moléculaires n'évoluent pas vers une augmentation de masse molaire dans les conditions usuelles de fabrication des pièces composites à base de polyamide de hautes masses molaires, lors du procédé de fabrication des pièces composites, et qui présente :

- une masse moléculaire en moyenne en nombre Mn entre 1500 et 8000 g/mol, cette masse est calculée selon la relation suivante :

$$Mn=2000000/(GTA+GTC+GTB),$$

- une concentration en groupements terminaux amine (GTA) supérieure ou égale à 25 meq/kg,
- une concentration en groupements terminaux acide (GTC) supérieure ou égale à 25 meq/kg,
- une concentration en groupements terminaux bloqués (GTB) supérieure ou égale à 25 meq/kg ; et

b) une étape de refroidissement et ensuite de récupération de l'article composite ;
le polyamide n'étant pas un polyamide modifié par un motif hydroxyl aromatique chimiquement lié à la chaine du polyamide.

**2.** Procédé selon la revendication 1, **caractérisé en ce que** le polyamide est choisi dans le groupe comprenant les polyamides obtenus par polycondensation d'au moins un diacide carboxylique aliphatique linéaire avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leur mélange et (co)polyamides.

**3.** Procédé selon la revendication 1 ou 2, caractérisé en que la concentration en groupements terminaux amine (GTA) du polyamide est comprise entre 30 meq/kg et 150 meq/kg.

**4.** Procédé selon l'une quelconque des revendications 1 à 3, caractérisé en que la concentration en groupements terminaux acide (GTC) du polyamide est comprise entre 30 meq/kg et 150 meq/kg.

**5.** Procédé selon l'une quelconque des revendications 1 à 4, caractérisé en que la concentration en groupements terminaux bloqués (GTB) du polyamide est comprise entre 30 meq/kg et 200 meq/kg.

**6.** Procédé selon l'une quelconque des revendications 1 à 5, **caractérisé en ce que** l'imprégnation de l'étoffe de renfort par la composition polyamide est réalisée par mise en présence de la composition polyamide à l'état fondu et de l'étoffe de renfort.

**7.** Procédé selon l'une quelconque des revendications 1 à 5, **caractérisé en ce que** l'imprégnation de l'étoffe de renfort par la composition polyamide est réalisée par mise en présence de l'étoffe de renfort avec la composition polyamide sous forme de poudre ou de film, puis mise en fusion de ladite composition polyamide.

**8.** Procédé selon l'une quelconque des revendications 1 à 7, **caractérisé en ce que** l'article comprend entre 25 et 70 % en volume d'étoffe de renfort par rapport au volume total de l'article.

**9.** Procédé selon l'une quelconque des revendications 1 à 8, **caractérisé en ce que** l'étoffe de renfort comprend des fils et/ou fibres de renfort choisis parmi les fils et/ou les fibres de carbone, de verre, d'aramides, de polyimides, de lin, de chanvre, de sisal, de coir, de jute, de kenaf et/ou de leur mélange.

**10.** Article susceptible d'être obtenu par le procédé selon l'une quelconque des revendications 1 à 9.

**Patentansprüche**

**1.** Verfahren zur Herstellung eines Verbundartikels durch Formen, das mindestens folgende Schritte umfasst:

a) einen Schritt zum Tränken eines Verstärkungsstoffs mit einer Zusammensetzung, die ein Polyamidharz im geschmolzenen Zustand umfasst, wobei das Harz ein sich nicht änderndes Harz ist, d.h. bei dem sich die Molekülmasse unter den gewöhnlichen Herstellungsbedingungen für Verbundteile auf Basis von Polyamiden mit hoher molarer Masse beim Herstellungsverfahren für Verbundteile nicht in Richtung einer Erhöhung der molaren Masse ändert, und das Folgendes aufweist:

- eine zahlengemittelte Molekülmasse Mn zwischen 1500 und 8000 g/mol, wobei diese Masse nach folgender Beziehung berechnet wird:

$$Mn = 2.000.000/(GTA+GTC+GTB),$$

- eine Konzentration endständiger Aminogruppen (GTA) größer gleich 25 mÄq/kg,
- eine Konzentration endständiger Säuregruppen (GTC) größer gleich 25 mÄq/kg,
- eine Konzentration endständiger blockierter Gruppen (GTB) größer gleich 25 mÄq/kg; und

b) einen Schritt zum Abkühlen und anschließend zum Gewinnen des Verbundartikels;
wobei das Polyamid kein Polyamid ist, das mit einer aromatischen Hydroxyleinheit modifiziert ist, die chemisch mit der Polyamidkette verbunden ist.

2. Verfahren nach Anspruch 1, **dadurch gekennzeichnet, dass** das Polyamid aus der Gruppe ausgewählt wird, die die Polyamide umfasst, die durch Polykondensation von mindestens einer unverzweigten aliphatischen Dicarbonsäure mit einem aliphatischen oder zyklischen Diamin oder zwischen mindestens einer aromatischen Dicarbonsäure und einem aliphatischen oder aromatischen Diamin erhalten werden, die Polyamide, die durch Polykondensation von mindestens einer Aminosäure oder einem Lactam mit sich selbst erhalten werden, oder ihr Gemisch und ihre (Co)polyamide.

3. Verfahren nach Anspruch 1 oder 2, **dadurch gekennzeichnet, dass** die Konzentration der endständigen Aminogruppen (GTA) des Polyamids zwischen 30 mÄq/kg und 150 mÄq/kg liegt.

4. Verfahren nach einem der Ansprüche 1 bis 3, **dadurch gekennzeichnet, dass** die Konzentration der endständigen Säuregruppen (GTC) des Polyamids zwischen 30 mÄq/kg und 150 mÄq/kg liegt.

5. Verfahren nach einem der Ansprüche 1 bis 4, **dadurch gekennzeichnet, dass** die Konzentration der endständigen blockierten Gruppen (GTB) des Polyamids zwischen 30 mÄq/kg und 200 mÄq/kg liegt.

6. Verfahren nach einem der Ansprüche 1 bis 5, **dadurch gekennzeichnet, dass** das Tränken des Verstärkungsstoffs mit der Polyamidzusammensetzung durch Inkontaktbringen der Polyamidzusammensetzung im geschmolzenen Zustand und des Verstärkungsstoffs erfolgt.

7. Verfahren nach einem der Ansprüche 1 bis 5, **dadurch gekennzeichnet, dass** das Tränken des Verstärkungsstoffs mit der Polyamidzusammensetzung durch Inkontaktbringen des Verstärkungsstoffs mit der Polyamidzusammensetzung in Form eines Pulvers oder einer Folie und anschließendes Schmelzen der Polyamidzusammensetzung erfolgt.

8. Verfahren nach einem der Ansprüche 1 bis 7, **dadurch gekennzeichnet, dass** der Artikel zwischen 25 und 70 Volumen-% Verstärkungsstoff bezogen auf das Gesamtvolumen des Artikels umfasst.

9. Verfahren nach einem der Ansprüche 1 bis 8, **dadurch gekennzeichnet, dass** der Verstärkungsstoff Verstärkungsfäden und/oder -fasern umfasst, die ausgewählt werden aus Kohlenstoff-, Glas-, Aramid-, Polyimid-, Leinen-, Hanf-, Sisal-, Kokos-, Jute-, Kenaffäden und/oder -fasern und/oder ihrem Gemisch.

10. Artikel, der sich mit dem Verfahren nach einem der Ansprüche 1 bis 9 erhalten lässt.

**Claims**

1. Process for the manufacture of a composite article by moulding, comprising at least the following stages:

a) a stage of impregnation of a reinforcing cloth with a composition comprising a polyamide resin in the molten state, the said resin being a non-evolutive resin, that is to say the molecular weights of which do not change towards an increase in molar mass under the normal conditions of manufacture of the composite parts based on polyamide of high molar masses, during the process for the manufacture of the composite parts, and which exhibits:

- a number-average molecular weight Mn between 1500 and 8000 g/mol; this weight is calculated according to the following relationship:

$$Mn = 2\ 000\ 000/(AEG + CEG + BEG),$$

- a concentration of amine end groups (AEG) of greater than or equal to 25 meq/kg,
- a concentration of acid end groups (CEG) of greater than or equal to 25 meq/kg,
- a concentration of blocked end groups (BEG) of greater than or equal to 25 meq/kg; and

b) a stage of cooling and subsequently of recovering the composite article;
the polyamide not being a polyamide modified by an aromatic hydroxyl unit chemically bonded to the polyamide chain.

2. Process according to Claim 1, characterized that the polyamide is chosen from the group consisting of the polyamides obtained by polycondensation of at least one linear aliphatic dicarboxylic acid with an aliphatic or cyclic diamine or between at least one aromatic dicarboxylic acid and an aliphatic or aromatic diamine, the polyamines obtained by polycondensation of at least one amino acid or lactam with itself, or their mixture and (co)polyamides.

3. Process according to Claim 1 or 2, **characterized in that** the concentration of amine end groups (ATG) or the polyamide is between 30 meq/kg and 150 meq/kg.

4. Process according to any one of Claims 1 to 3, **characterized in that** the concentration of acid end groups (CEG) of the polyamide is between 30 meq/kg and 150 meq/kg.

5. Process according to any one of Claims 1 to 4, **characterized in that** the concentration of blocked end groups (BEG) of the polyamide is between 30 meq/kg and 200 meq/kg.

6. Process according to any one of Claims 1 to 5, **characterized in that** the impregnation the reinforcing cloth by the polyamide composition is carried out by bringing together the polyamide composition in the molten state and the reinforcing cloth.

7. Process according to any one of Claims 1 to 5, **characterized in that** the impregnation of the reinforcing cloth by the polyamide composition is carried out by bringing together the reinforcing cloth whit the polyamide composition in the powder or film form and then melting the said polyamide composition.

8. Process according to any one of Claims 1 to 7, **characterized in that** the article comprises between 25% and 70% by volume of reinforcing cloth, with respect to the total volume of the article.

9. Process according to any one of Claims 1 to 8, **characterized in that** the reinforcing cloth comprises reinforcing yarns and/or fibres chosen from yarns and/or fibres formed of carbon, glass, aramids, polyamides, flax, hemp, sisal, coir, jute, kenaf and/or their mixture.

10. Article capable of being obtained by the process according to any one of Claims 1 to 9.

**EP 2 513 203 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0261020 B1
- WO 03014198 A
- US 20080274355 A
- WO 2008155318 A